# EUROPÄISCHE PATENTSCHRIFT

(11) **EP 3 208 543 B1**
(45) Veröffentlichungstag und Bekanntmachung des Hinweises auf die Patenterteilung: **15.04.2020**
(21) Anmeldenummer: 17151911.9
(22) Anmeldetag: 18.01.2017
(51) Int. Cl.: F24C 7/08, G01K 1/02

(54) **VERFAHREN ZUM BACKEN VON GARGUT UND GARGERÄT**
METHOD FOR BAKING FOOD ITEMS AND COOKING DEVICE
PROCÉDÉ DE CUISSON D'ARTICLES ALIMENTAIRES ET APPAREIL DE CUISSON

(30) Priorität: 16.02.2016 DE 102016102695
(43) Veröffentlichungstag der Anmeldung: 23.08.2017
(73) Patentinhaber: Miele & Cie. KG, 33332 Gütersloh (DE)
(72) Erfinder: Sillmen, Ulrich, Dr., 33332 Gütersloh (DE); Krümpelmann, Thomas, Dr., 33332 Gütersloh (DE); Scharmann, Jürgen, 33442 Herzebrock-Clarholz (DE); Unrau, Elena, 59302 Oelde (DE)

(56) Entgegenhaltungen:
- EP-A1- 1 793 173
- DE-A1-102005 015 028
- DE-A1-102012 222 144

## Beschreibung

Die vorliegende Erfindung betrifft ein Verfahren zum Backen von Gargut mit wenigstens einem Gargerät nach dem Oberbegriff des Anspruchs 1. Die Erfindung betrifft außerdem ein Gargerät mit wenigstens einem mittels wenigstens einer Heizeinrichtung beheizbaren Garraum und mit wenigstens einer Steuereinrichtung zur Einstellung von Gerätefunktionen.

Moderne Gargeräte sind häufig mit Automatikprogrammen ausgestattet, die die Zubereitung von Lebensmitteln erleichtern und das Ergebnis eines Garvorgangs verbessern sollen. Beispielsweise wählt der Benutzer ein Produkt, das er zubereiten möchte, aus einer Liste aus und muss anschließend nur noch den Garvorgang starten. Alle weiteren erforderlichen Einstellungen des Gargerätes können dann durch das Automatikprogramm vorgegeben sein, wie z. B. Betriebsart und Garraumtemperatur.

Für ein optimales Garergebnis mit einem Automatikprogramm sind allerdings eine Steuerung des Garvorgangs und insbesondere eine gezielte Regelung der Garraumtemperatur notwendig, die wiederum eine möglichst genaue Kenntnis des Garzustands voraussetzen. Für die Überwachung des Garzustands ist meist eine Sensorik vorgesehen, mit welcher bestimmte Parameter während des Garvorgangs erfasst und ausgewertet werden. Eine solche Überwachung funktioniert für Bratvorgänge und andere vergleichbare Garverfahren in der Regel insgesamt zufriedenstellend.

Für Backvorgänge ist die Überwachung und Ermittlung des Garzustands allerdings stark verbesserungswürdig. Im Stand der Technik werden dazu in der Regel Feuchtesensoren eingesetzt, um anhand der beim Backen aus dem Teig austretenden Feuchtigkeit Rückschlüsse auf den Garzustand ziehen zu können. Als Feuchtesensoren werden häufig Sauerstoffsensoren eingesetzt, mit denen die Feuchte indirekt gemessen wird. Solche Sensoren sind meist sehr teuer und haben oft Probleme in der Umgebung von hohen Temperaturen sowie mit der aerosolhaltigen Atmosphäre im Garraum. Zudem unterliegen elektrochemisch wirkende Feuchtesensoren einer starken Signaldrift durch chemische Veränderungen an ihren Elektroden.

Eine weitere Schwierigkeit der Garzustandsüberwachung bei Backvorgängen liegt darin, dass das Gargut sich während des Backens regelmäßig stark verändert. Beispielsweise geht der Teig durch die Hitze im Garraum zunächst auf, sodass es oft sogar zu einer Teigvolumenverdopplung kommt. Im weiteren Backverlauf kann dann aber wieder ein Rückgang des Teigvolumens erfolgen. Zudem ist der Teig am Anfang nicht formstabil und sehr viskos, während er nachher im Inneren eine festere Krume und außen sogar oft eine sehr feste Kruste aufweist.

Die Überwachung mittels Kerntemperaturfühlern, wie sie vom Braten her bekannt sind, ist beim Backen daher nicht möglich. Zum einen ist der Teig für ein Einstechen solcher Thermometer häufig nicht fest genug. Zum anderen verändert sich die Lage der Kerntemperaturzone beim Aufgehen meist so stark, dass ein Kerntemperaturfühler regelmäßig viel zu hohe oder viel zu niedrige Temperaturwerte liefert. Zudem ist die Lage der Kerntemperaturzone nicht nur vom Backfortschritt abhängig, sondern auch von der Art des Teiges. Beispielsweise zeigt ein Rührteig ein deutlich stärkeres Driften der kältesten Stelle im Teig als ein Hefeteig.

Die Bestimmung der Feuchteabgabe des Garguts mittels einer Temperaturüberwachung ist daher besonders vorteilhaft, da statt kostenintensiven und häufig störanfälligen Feuchtesensoren beständige Temperatursensoren eingesetzt werden. Sensoren zur Temperaturerfassung können auch in heißen und feuchten Garräumen betriebssicher eingesetzt werden und sind in der Regel kostengünstiger.

Aus der DE 10 2012 222 144 A1 ist ein Verfahren zur Steuerung eines Garablaufs bekannt, bei dem ein Kerntemperaturfühler mit mindestens zwei Temperatursensoren eingesetzt wird. Es wird die Temperaturdifferenz zwischen dem Sensor mit dem niedrigsten Temperaturwert und dem Sensor mit dem höchsten Temperaturwert ermittelt und anhand dieser Temperaturdifferenz wird der Garvorgang gesteuert.

Auch die DE 10 2005 015 028 B4 beschreibt eine Temperaturmesssonde mit mehreren Messelementen. Hier wird sowohl die Ermittlung einer mittleren Garguttemperatur als auch die Ermittlung der gleichzeitig vorliegenden der niedrigsten und höchsten Temperatur im Gargut beschrieben.

In der EP 1 793 173 B1 wird ein Mehrpunkttemperatursensor, also eine lanzenförmige Sondere mit mehreren Temperatursensoren zur Führung eines Garprozesses verwendet, bei dem sich an den Garvorgang ein Abkühlvorgang anschließt. Dabei wird während des Garvorgangs der Sensor mit der niedrigsten Temperatur bestimmt und während des Abkühlvorgangs ausgewertet.

Es ist daher die Aufgabe der vorliegenden Erfindung, die Überwachung des Garzustands während Backvorgängen zu verbessern.

Diese Aufgabe wird gelöst durch ein Verfahren mit den Merkmalen des Anspruchs 1. Weitere Ausgestaltungen ergeben sich aus den Unteransprüchen und den Ausführungsbeispielen. Die Aufgabe wird außerdem durch ein Gargerät mit den Merkmalen des Anspruchs 5 gelöst.

Das erfindungsgemäße Verfahren dient zum Backen von Gargut mit wenigstens einem Gargerät. Mit wenigstens einer Heizeinrichtung wird wenigstens ein Garraum beheizt. Mit wenigstens einer Steuereinrichtung wird wenigstens eine Gerätefunktion des Gargeräts eingestellt. Dabei wird mit wenigstens einem Messsystem an wenigstens zwei beabstandeten Messstellen jeweils wenigstens eine charakteristische Größe für eine Temperatur des Gargutes erfasst und als eine Messtemperatur registriert. Besonders bevorzugt wird an den Messstellen jeweils wenigstens eine charakteristische Größe für eine Krumentemperatur des Garguts erfasst und als eine Messtemperatur registriert. Aus den registrierten Messtemperaturen, welche zu wenigstens einem definierten Messzeitpunkt an den verschiedenen Messstellen erfasst werden, werden die niedrigste und die höchste Messtemperatur bestimmt. Die niedrigste Messtemperatur wird als eine Minimaltemperatur zur Ermittlung eines Garzustands des Garguts herangezogen. Die höchste Messtemperatur wird als eine Maximaltemperatur zur Ermittlung des Garzustands des Garguts herangezogen. In Abhängigkeit des ermittelten Garzustands wird wenigstens eine Gerätefunktion durch die Steuereinrichtung eingestellt.

Das erfindungsgemäße Verfahren hat viele Vorteile. Ein erheblicher Vorteil ist, dass wenigstens zwei Messstellen herangezogen werden. Mit wenigstens zwei Messstellen können die für den Garzustand charakteristischen Temperaturzonen des Garguts auch dann erfasst werden, wenn diese Zonen ihre Position während des Backens verändern. Somit ist eine sehr zuverlässige Garzustandsüberwachung auch dann möglich, wenn sich die relative Lage des Gargutes zu den Messstellen beim Backen durch den Aufgang des Teiges verändert.

Ein weiterer Vorteil des erfindungsgemäßen Verfahrens ist, dass die niedrigsten und die höchsten Temperaturwerte der Messstellen bestimmt werden. So können die Minimaltemperatur bzw. die Maximaltemperatur bestimmt werden, welche besonders charakteristische Parameter für den Garzustand von Teigwaren sind. Beispielsweise gibt die niedrigste Temperatur im Teig Auskunft darüber, ob die Krume bereits fertig durchgebacken ist oder nicht. Zudem kann durch die Bestimmung der Minimaltemperatur über wenigstens zwei Messstellen die kühlste Temperaturzone im Teig auch dann entsprechend zuverlässig ermittelt werden, wenn sich diese beim Backvorgang beispielsweise von der einen Messstelle zu anderen schiebt.

In allen Ausgestaltungen ist es bevorzugt, dass an den wenigstens zwei Messstellen zu wenigstens einem weiteren definierten Messzeitpunkt jeweils wenigstens eine charakteristische Größe für eine Temperatur erfasst wird. Vorzugsweise wird aus den registrierten Messtemperaturen, welche zu wenigstens einem weiteren definierten Messzeitpunkt an den verschiedenen Messstellen erfasst wurden, die niedrigste und/oder die höchste Messtemperatur bestimmt. Dabei wird die niedrigste bzw. die höchste Messtemperatur vorzugsweise als wenigstens eine weitere Minimaltemperatur bzw. weitere Maximaltemperatur zur Ermittlung des Garzustands des Garguts herangezogen.

Es werden Messtemperaturen zu einer Mehrzahl an definierten Messzeitpunkten erfasst und registriert. Bevorzugt erfolgt eine fortlaufende Erfassung und Registrierung weiterer Messtemperaturen. Vorzugsweise erfolgt dabei auch eine fortlaufende Ermittlung weiterer Minimaltemperaturen und/oder Maximaltemperaturen. Durch solche weiteren Messungen bzw. durch fortlaufende Messungen kann die Zuverlässigkeit des Verfahrens erheblich erhöht werden. Beispielsweise können dadurch Messschwankungen und/oder Ausreißer kompensiert werden. Möglich ist auch, dass anhand der fortlaufenden Erfassung und Registrierung weiterer Messtemperaturen die Minimaltemperatur und/oder die Maximaltemperatur als eine Funktion derZeit zur Ermittlung des Garzustands herangezogen wird.

Dann wird wenigstens ein zeitlicher Gradient der Minimaltemperatur und und/oder wenigstens ein zeitlicher Gradient der Maximaltemperatur ermittelt. Möglich und bevorzugt ist auch, dass wenigstens ein zeitlicher Gradient der Differenz von Minimaltemperatur und Maximaltemperatur ermittelt wird. Der zeitliche Gradient entspricht dabei vorzugsweise der ersten Ableitung. Für die Ermittlung des zeitlichen Gradienten werden vorzugsweise fortlaufend ermittelte Maximaltemperaturen und/oder Minimaltemperaturen bzw. fortlaufend ermittelte Differenzen von Minimaltemperatur und Maximaltemperatur herangezogen. Durch das Heranziehen des zeitlichen Gradienten kann der Garzustand besonders zuverlässig bestimmt werden, da hierbei Messungenauigkeiten und Ausreißer anhand der zeitlichen Betrachtung entsprechend kompensiert werden können.

Möglich und bevorzugt ist auch, dass der zeitliche Gradient als Funktion der Zeit berechnet und herangezogen wird. Der zeitliche Gradient als Funktion der Zeit entspricht insbesondere der zweiten Ableitung der für die zur Bestimmung des zeitlichen Gradienten herangezogenen Funktionen.

Der zeitliche Gradient und/oder der zeitliche Gradient als Funktion der Zeit werden mit wenigstens einem Schwellenwert verglichen. Dann ist ein zeitlicher Gradient und/oder ein zeitlicher Gradient als Funktion der Zeit unterhalb des Schwellenwertes wenigstens eine notwendige und/oder hinreichende Voraussetzung für die Annahme eines fertigen Garzustands. Der zeitliche Gradient und/oder der zeitliche Gradient als Funktion der Zeit unterhalb des Schwellenwertes ist besonders bevorzugt sowohl eine notwendige als auch hinreichende Voraussetzung für die Annahme des fertigen Garzustands. Es kann auch ein Erreichen und/oder Überschreiten des Schwellenwertes herangezogen werden. Möglich ist auch, dass wenigstens eine weitere funktionsanalytische Auswertung erfolgt. Beispielsweise können Steigungen, Wendepunkte, Sattelpunkte und Maxima bzw. Minima des zeitlichen Gradienten bzw. des zeitlichen Gradienten als Funktion der Zeit berechnet und für die Ermittlung des Garzustands herangezogen werden.

In einer vorteilhaften Weiterbildung des Verfahrens wird bei einem zeitlichen Gradienten und/oder bei einem zeitlichen Gradienten als Funktion der Zeit unterhalb des Schwellenwertes auch dann ein fertiger Garzustand angenommen, wenn die Minimaltemperatur oberhalb des zugehörigen Schwellenwertes ist. Vorzugsweise wird der fertige Garzustand auch dann angenommen, wenn die Differenz zwischen der Minimaltemperatur und der Maximaltemperatur oberhalb des zugehörigen Schwellenwertes ist. Eine solche Ausgestaltung hat den Vorteil, dass in der Regel immer ein fertiger Garzustand annehmbar und somit stets ein sicherer Abschaltpunkt einer Gerätefunktion gegeben ist. Einem Übergaren der Backware wird somit zuverlässig entgegengewirkt. Beispielsweise kann auch dann ein fertiger Garzustand angenommen werden, wenn am Garende immer noch eine zu hohe Temperaturdifferenz zwischen Minimal- und Maximaltemperatur besteht. Das kann beispielsweise dann der Fall sein, wenn Messabweichungen und/oder Kalibrierabweichungen vorliegen.

In allen Weiterbildungen ist es bevorzugt, dass eine wenigstens teilweise Anpassung wenigstens eines Schwellenwertes vorgesehen ist. Beispielsweise erfolgt wenigstens eine Benutzereingabe zur wenigstens teilweisen Anpassung des Schwellenwertes. Der angepasste Schwellenwert wird insbesondere für die Ermittlung des Garzustands wenigstens teilweise berücksichtigt und vorzugsweise vollständig berücksichtigt. Möglich ist auch, dass eine Rangfolge für die Berücksichtigung von angepassten und nicht angepassten Schwellenwerten vorgegeben wird. Beispielsweise ist eine solche Anpassung für den Schwellenwert für die Minimaltemperatur und/oder Maximaltemperaturen vorgesehen. Es kann auch eine Anpassung des Schwellenwertes für die Differenz zwischen der Minimaltemperatur und der Maximaltemperatur vorgesehen sein. Auch der Schwellenwert für den zeitlichen Gradienten und/oder den zeitlichen Gradienten als Funktion der Zeit kann anpassbar sein. Vorzugsweise ist eine Anpassung für mehrere und/oder alle Schwellenwerte vorgesehen. Die Schwellenwerte sind insbesondere in einer Speichereinrichtung hinterlegt. Beispielsweise kann ein Schwellenwert anhand bekannter Temperaturverläufe und/oder im Versuch ermittelter Temperaturverläufe bestimmt werden.

In allen Weiterbildungen ist es ebenfalls bevorzugt, dass die Messstellen an wenigstens einem Messmodul angeordnet sind. Das Messmodul wird vorzugsweise mittels wenigstens einer Befestigungseinrichtung insbesondere außerhalb vom Gargut im Garraum befestigt. Dabei liegt insbesondere wenigstens eine der Messstellen im Gargut. Dabei ist vorgesehen und bevorzugt, dass während des Backens die Anzahl der im Gargut befindlichen Stellen zunimmt. Dadurch kann beispielsweise ein Aufgehen des Teiges kompensiert werden. Es können auch zu Beginn bereits alle oder ein wesentlicher Teil der vorgesehenen Messstellen im Teig angeordnet werden. Vorzugsweise wird das Messmodul je nach Größe und/oder Form des Garguts variabel im Garraum angeordnet. Beispielsweise kann wenigstens eine oder bevorzugt alle Messstellen des Messmoduls in den Teig eingestochen werden, während das Messmodul mit der Befestigungseinrichtung im Garraum angebracht wird.

Vorzugsweise sind wenigstens drei und besonders bevorzugt ist eine Mehrzahl an beabstandeten Messstellen zur Temperaturerfassung vorgesehen. Dabei kann von dem Messsystem gezielt wenigstens eine der Messstellen bevorzugt herangezogen werden. Wenigstens eine Messstelle kann auch wenigstens zeitweise vernachlässigt werden. Die Erfassung erfolgt insbesondere an allen Messstellen zur gleichen Zeit. Es kann auch vorgesehen sein, dass an den Messstellen eine Erfassung zu unterschiedlichen Zeitpunkten erfolgt. Beispielsweise werden die Messstellen nacheinander abgerufen. Auch die Registrierung der Messtemperaturen kann für alle Messstellen zeitgleich oder zu unterschiedlichen Zeiten erfolgen. Die Werte werden vorzugsweise in wenigstens einer Speichereinrichtung hinterlegt.

Neben der Minimaltemperatur bzw. die Maximaltemperatur kann auch eine mittlere Temperatur bestimmt werden. Möglich sind auch weitere rechnerische und insbesondere statistische Auswertungen der registrierten Messtemperaturen. Ein Garzustand ist z. B. durch folgende Zustände gekennzeichnet: fertig durchgebacken, noch nicht fertig durchgebacken, Krume fertig gebacken ohne Bräunung der Kruste, Krume fertig gebacken mit Bräunung der Kruste. Die Einstellung der Gerätefunktion umfasst insbesondere eine Regelung und/oder Steuerung der Heizeinrichtung. Es kann auch wenigstens ein Signal ausgegeben werden.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine stark schematische Darstellung eines erfindungsgemäßen Gargeräts;
- Figur 2: eine stark schematische Darstellung eines Backvorgangs;
- Figur 3: eine stark schematische Darstellung eines anderen Backvorgangs;
- Figuren 4-7: Weiterbildungen des Gargerätes;
- Figur 8: ein skizzierter Messverlauf während eines Backvorgangs; und
- Figur 9: ein weiterer skizzierter Messverlauf während eines Backvorgangs.

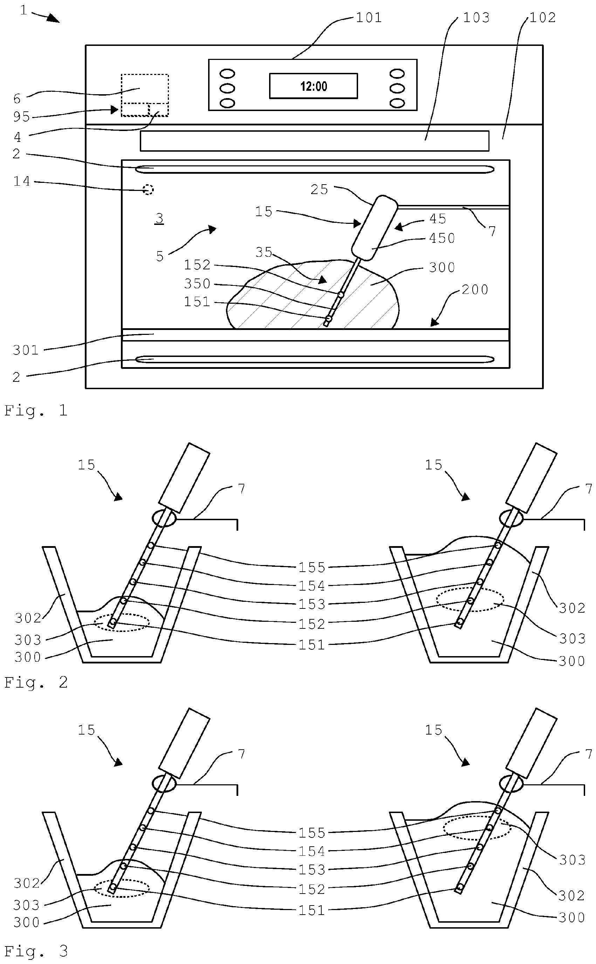

Die Figur 1 zeigt ein erfindungsgemäßes Gargerät 1 mit einem Messsystem 5. Das erfindungsgemäße Verfahren wird vorzugsweise mit dem Gargerät 1 durchgeführt. Das Gargerät 1 umfasst einen Garraum 3, welcher durch eine Heizeinrichtung 2 beheizbar und durch eine Tür 102 verschließbar ist. Die hier dargestellte Heizeinrichtung 2 umfasst beispielhaft eine Oberhitzeheizquelle und eine Unterhitzeheizquelle. Vorzugsweise sind auch weitere Heizquellen vorgesehen, wie zum Beispiel ein Grillheizkörper und/oder eine Umluftheizquelle und/oder andere thermische Heizquellen. Möglich ist auch, dass die Heizeinrichtung 2 eine Mikrowellenquelle und/oder eine Dampfheizquelle aufweist. Das Gargerät 1 kann auch als ein Kombigerät ausgeführt sein, beispielsweise als ein Backofen mit Dampfgarfunktion und/oder Mikrowellenfunktion.

Das Gargerät 1 ist über eine Bedieneinrichtung 101 bedienbar. Über die Bedieneinrichtung 101 können beispielsweise verschiedene Betriebsarten, Betriebstemperaturen und vorzugsweise verschiedene Programmbetriebsarten und Automatikfunktionen eingestellt werden. Zudem ist die Bedieneinrichtung 101 auch mit einer Anzeigeeinrichtung ausgestattet, über die den Benutzer verschiedene Informationen und/oder Signale über den Betriebsablauf und Garvorgang angezeigt werden. Die Bedieneinrichtung 101 kann auch mit einer berührungsempfindlichen Oberfläche bzw. als ein sogenannter Touchscreen ausgebildet sein.

Das Gargut 300, z. B. ein Hefeteig, befindet sich hier auf einem als Gargutträger 301 ausgebildeten Zubehörteil 200. Der Gargutträger 301 ist beispielsweise ein Backblech oder ein Rost. Der Gargutträger 301 ist im Garraum 3 auf einer hier nicht gezeigten Gargutträgeraufnahme 23 aufgenommen.

Eine Steuereinrichtung 6 dient zur Regelung bzw. Steuerung verschiedener Gerätefunktionen, z. B. zur Temperaturregelung und/oder für die Automatikfunktionen. Mittels der Steuereinrichtung 6 wird zum Beispiel die Heizleistung der Heizeinrichtung 2 so eingestellt, dass im Garraum 3 Temperaturen vorliegen, welche im Bereich einer geforderten Solltemperatur liegen. Zur Überwachung der Temperaturen im Garraum 3 ist hier eine Sensoreinrichtung 4 mit einer Sensoreinheit 14 vorgesehen sein. Die Sensoreinheit 14 ist hier beispielhaft an einer Garraumwandung im oberen Bereich des Garraums 3 angebracht und gestrichelt eingezeichnet. Die Sensoreinrichtung 4 kann eigenständig oder in Kombination mit dem Messsystem 5 betrieben werden.

Das Gargerätsystem 100 weist ein hier stark schematisiert dargestelltes Messsystem 5 auf. Das Messsystem 5 umfasst ein Messmodul 15 mit zwei Messstellen 151,152 sowie ein Auswertemodul 95 zur Auswertung der Messdaten. Bevorzugt ist eine Ausgestaltung mit drei oder mehr Messstellen. Das Messmodul 15 ist hier als Zubehörmodul 25 für das Gargerät 1 vorgesehen und drahtlos mit dem Auswertemodul 95 verbunden. Hier ist aufseiten des Messmoduls 15 eine passive Übertragungstechnik bevorzugt. Möglich ist auch eine aktive Übertragungstechnik. Es kann auch eine Anbindung des Messmoduls 15 per Kabel erfolgen. Das Auswertemodul 95 ist hier in der Steuereinrichtung 6 des Gargerätes 1 untergebracht. An den Messstellen 151, 152 des Messsystems 5 sind charakteristische Größen für Temperaturen erfassbar, die durch das Auswertemodul 95 ausgewertet und zur Ermittlung des Garzustands des Garguts 300 herangezogen werden.

Das hier gezeigte Messmodul 15 erfasst mit seinen Messstellen 151, 152 wenigstens eine charakteristische Größe für eine Krumentemperatur des Garguts 300. Dazu umfassen die Messstellen 151,152 jeweils wenigstens einen Temperatursensor. Beispielsweise kann ein Widerstandsthermometer eingesetzt werden. Möglich ist auch, dass an den Messstellen 151,152 die Temperatur dadurch erfasst wird, dass die Veränderung einer Resonanzfrequenz eines Schwingkreises in Abhängigkeit der Temperatur registriert wird. Möglich sind auch andere geeignete Sensoren zur Temperaturerfassung, wie zum Beispiel Thermoelemente.

Für einen bestimmungsgemäßen Einsatz wird das Messmodul 15 in einer Messposition zum Gargut 300 ausgerichtet. Dazu ist das Messmodul 15 hier mit einem Einstichabschnitt 35 versehen, welcher als Spieß 350 ausgebildet ist. Die Messstellen 151,152 sind im Einstichabschnitt 35 angeordnet. So muss der Spieß einfach nur in den Teig gesteckt werden, um die Messstellen auszurichten. Das Messmodul 15 umfasst zudem einen Schaftabschnitt 45, welcher bei eingestochenem Messmodul 15 außerhalb des Garguts 300 verbleibt. Der Schaftabschnitt 45 weist eine Griffeinrichtung 450 zur sicheren Handhabung des Messmoduls 15 auf. Dabei ist hier der gesamte Schaftabschnitt 45 als Griffeinrichtung 450 ausgebildet. Im Schaftabschnitt 45 können eine oder mehrere weitere Messstellen vorgesehen sein, beispielsweise um die Umgebungstemperatur und/oder die Oberflächentemperatur des Garguts 300 zu erfassen.

Zur Anordnung des Messmoduls 15 ist hier eine Befestigungseinrichtung 7 vorgesehen. Die Befestigung des Messmoduls 15 am Gargerät 1 bzw. im Garraum 3 oder an einem Zubehörteil 200 ist besonders vorteilhaft, da der Teig in der Regel zu weich bzw. zu flüssig ist, und um dem Messmodul 15 Halt zu geben. Mit der Befestigungseinrichtung 7 kann das Messmodul 15 variabel im Garraum 3 angeordnet werden. Dadurch kann eine individuelle Ausrichtung des Messmoduls 15 und somit auch der Messstellen 151,152 erfolgen, welche an die jeweilige Form und/oder Größe des Garguts 300 bzw. an die eingesetzte Teigmenge optimal angepasst ist. Eine solche variable Anordnung ist von großem Vorteil, da so eine möglichst große Anzahl der Messstellen 151,152 innerhalb des Teiges positioniert werden kann, was vorteilhaft für die Bestimmung des Garzustandes ist. Ein weiterer Vorteil der Befestigungseinrichtung 7 ist, dass das Gargut 300 nicht durch das Messmodul 15 beeinflusst wird. Durch die Befestigungseinrichtung 7 muss das Messmodul nicht unmittelbar an bzw. in dem Gargut 300 befestigt werden, wie es beispielsweise bei herkömmlichen Einstichthermometern der Fall ist. Dadurch wird ein Aufgehen des Teiges nicht ungünstig beeinflusst. Die hier gezeigte Befestigungseinrichtung 7 ist verschwenkbar ausgebildet. Eine solche verschwenkbare Befestigungseinrichtung 7 kann auch in den anderen gezeigten beispielhaften Ausgestaltungen eingesetzt werden.

In den Figuren 2 und 3 ist stark schematisiert gezeigt, wie sich die relative Lage der kühlsten Temperaturzone 303 während des Backvorgangs typischerweise für ein bestimmtes Gargut 300 verändert. Dabei ist der Zustand des Garguts 300 in der linken Abbildung in einer frühen Phase und in der rechten Abbildung in einer späten Phase des Backvorgangs gezeigt. Das Gargut 300 ist in der Figur 2 ein Hefeteig und in der Figur 3 ein Rührteig. Das Gargut 300 ist in einer Backform 302 aufgenommen. Der Hefeteig geht während des Backens auf und vergrößert sein Volumen dabei erheblich. Während des Aufgehens verschiebt sich die kühlste Temperaturzone 303 nach oben, bleibt jedoch in der Regel während des gesamten Backvorgangs in einem zentralen Bereich des Teiges. Auch der Rührteig geht während des Backens auf und nimmt an Volumen zu. Zu Beginn des Backvorgangs liegt die kühlste Temperaturzone 303 auch beim Rührteig in einem zentralen Bereich. Während des weiteren Backens schiebt der aufgehende Teig den noch nicht gebackenen Teil vor sich her nach oben. Daher liegt bei dem Rührteig die kühlste Temperaturzone 303 im fortgeschrittenen Backverlauf und auch zum Fertigzeitpunkt in der Regel relativ weit oben unterhalb der Kruste. Die kühlste Temperaturzone 303 liegt also je nach Teigart an einer unterschiedlichen Stelle und insbesondere nicht immer in einem zentralen Bereich des Garguts 300.

Um trotz der individuellen Lageänderung die kühlste Temperaturzone 303 während des Backvorgangs ermitteln und beobachten zu können, wird hier ein Messmodul 15 mit einer Mehrzahl an Messstellen 151-155 eingesetzt. Um die kühlste Temperaturzone 303 zu finden, werden die an den Messstellen 151-155 zu einem bestimmten Zeitpunkt registrierten Messtemperaturen miteinander verglichen. Dabei wird die niedrigste Messtemperatur ermittelt. Die niedrigste Messtemperatur wird dann als eine Minimaltemperatur herangezogen, um die Temperatur an der kühlsten Temperaturzone 303 zu beschreiben. Anhand der Minimaltemperatur kann dann z. B. der Fertigzeitpunkt sehr zuverlässig ermittelt werden. Beispielsweise kann für die meisten Arten von Teig angenommen werden, dass bei einer Temperatur von etwa 98 °C an der kühlsten Temperaturzone 303 die Krume fertig gebacken ist. Anhand des Abgleichs der an den Messstellen 151-155 erfassten Messtemperaturen kann die kühlste Temperaturzone 303 somit zuverlässig aufgefunden werden.

Um die kühlste Temperaturzone 303 auch während des Backvorgangs weiterhin überwachen zu können, muss diese zuverlässig weiterverfolgt werden. Da diese je nach Teigart jedoch sehr unterschiedlich wandert, kann nicht immer dieselbe Messstelle 151-155 für die Erfassung der kühlsten Temperaturzone 303 während des gesamten Backvorgangs eingesetzt werden. Das Messsystem 5 muss also dieser Wanderung folgen, um die erforderlichen Temperaturen über den Backprozess beobachten zu können. Eine zuverlässige Verfolgung der kühlsten Temperaturzone 303 während des Backvorgangs wird anhand der fortlaufenden Überwachung von einer Mehrzahl an Messstellen 151-155 erreicht. Aufgrund eines Abgleichs der an diesen Messstellen 151-155 zu einem bestimmten Messzeitpunkt erfassten Temperaturwerte kann dann die niedrigste Temperatur und somit die Minimaltemperatur im Teig bestimmt werden.

Für den Hefeteig ist beispielsweise zu Beginn des Backvorgangs die Messstelle 151 in der kühlsten Temperaturzone 303 angeordnet. Durch die Wanderung der kühlsten Temperaturzone 303 liegt dieser mit fortgeschrittenem Backvorgang nun im Bereich der Messstelle 152. Ist die von dieser Messstelle 152 erfasste Temperatur die niedrigste aller Messtemperaturen und liegt zudem über einem Schwellenwert von beispielsweise 98 °C, so kann der Fertiggarpunkts für den Hefeteig angenommen werden. Beim Backen des Rührteigs wandert die kühlste Temperaturzone 303 von der ersten Messstelle 151 hier zu der vierten Messstelle 154. Da sich die kühlste Temperaturzone 303 je nach Art des Teiges und auch in Abhängigkeit des gewählten Backverfahrens in nahezu unvorhersehbarer Weise verschiebt, bietet die hier vorgestellte Erfassung der Minimaltemperatur im Teigvolumen anhand mehrerer Messstellen eine sehr zuverlässige Überwachung des Garzustands.

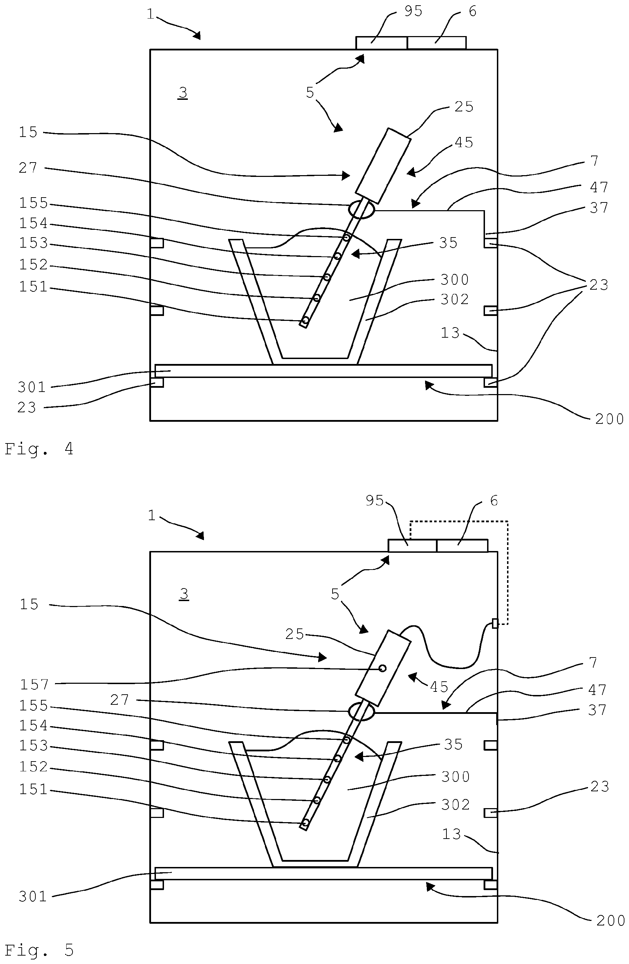

Die Figur 4 zeigt das Messmodul 15 an einer Befestigungseinrichtung 7, welche an einer Gargutträgeraufnahme 23 befestigt ist. Die Gargutträgeraufnahme 23 ist direkt oder über eine geeignete Montageeinrichtung an einer Garraumwandung 13 befestigt. Die Gargutträgeraufnahme 23 dient zur Aufnahme für verschiedene Gargutträger 301. Das Messmodul 15 verfügt hier über 5 Messstellen 151-155, welche im Einstichabschnitt 35 angeordnet sind.

Die Befestigungseinrichtung 7 besitzt dazu eine Koppeleinrichtung 27, an welcher das Messmodul 15 befestigt werden kann. Beispielsweise ist die Koppeleinrichtung 27 als eine Öse ausgebildet, in welche der Einstichabschnitt 35 unkompliziert eingesteckt werden kann. Möglich sind auch andere Verbindungen, wie zum Beispiel formschlüssige und/oder kraftschlüssige Kupplungen. Beispielsweise können Rast und/oder Steckverbindungen vorgesehen sein. Die Koppeleinrichtung 27 kann auch wenigstens teilweise an dem Schaftabschnitt 45 und/oder dem Einstichabschnitt 35 befestigt sein.

Die Befestigungseinrichtung 7 ist zudem mit einer zweiten Koppeleinrichtung 37 an einer Gargutträgeraufnahme 23 befestigt, welche an einer Garraumwandung 13 angeordnet ist. Die beiden Koppeleinrichtungen 27, 37 sind durch einen Abstandshalter 47 beabstandet an der Befestigungseinrichtung 7 befestigt. Der Abstandshalter 47 kann wenigstens teilweise starr und/oder wenigstens teilweise flexibel ausgebildet sein. Der Abstandshalter 47 ist z. B. als Schwanenhals ausgebildet.

Die hier gezeigte erste und/oder zweite Koppeleinrichtung 27, 37 und insbesondere auch die in den anderen Ausgestaltungen vorgesehenen Koppeleinrichtungen 27, 37 sind vorzugsweise so ausgestaltet, dass sie durch den Benutzer ohne Einsatz von Werkzeug im Garraum 3 montiert werden können. Beispielsweise sind Steckverbindungen und/oder Rastverbindungen vorgesehen. Möglich ist auch, dass entsprechende Schraubverbindungen vorgesehen sind.

In der Figur 5 ist das Messmodul 15 ist beispielhaft als ein kabelgebundenes Gargutthermometer ausgebildet. Insbesondere ist im Garraum 3 eine Steckverbindung vorgesehen, sodass das Messmodul 15 bei Bedarf aus dem Garraum 3 entnommen werden kann. Das Messmodul 15 verfügt zudem über eine Messstelle 157 im Schaftabschnitt. Dort kann z. B. die Umgebungstemperatur erfasst und für die Überwachung des Garzustands wenigstens zeitweise herangezogen werden. Die hier gezeigte Befestigungseinrichtung 7 ist an der zweiten Koppeleinrichtung 37 mit der Garraumwandung 13 verbunden. Dazu ist vorzugsweise an der Garraumwandung 13 ein entsprechender Montagebereich vorgesehen, welcher mit der zweiten Koppeleinrichtung 37 verbunden werden kann. Besonders bevorzugt sind mehrere solche Montageeinrichtungen im Garraum 3 vorgesehen, sodass eine variable Anordnung der Befestigungseinrichtung 7 möglich ist. Es kann auch vorgesehen sein, dass die Befestigungseinrichtung 7 fest an der Garraumwandung 13 installiert ist.

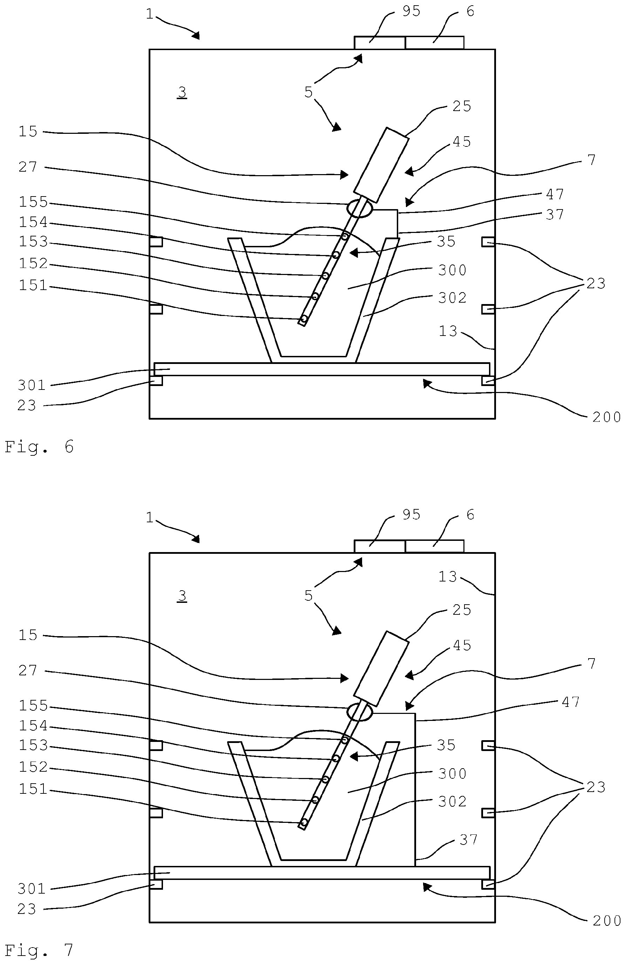

In der Figur 6 ist die Befestigungseinrichtung 7 an einem Zubehörteil 200 befestigt. Das Zubehörteil 200 ist hier als eine Backform 302 ausgebildet. Das Zubehörteil 200 kann auch als eine beliebige andere Aufnahme für Gargut bzw. Teig ausgestaltet sein. In dem hier gezeigten Beispiel wird das Zubehör auf einem Gargutträger 301 im Garraum 3 abgestellt. Das Zubehörteil kann aber beispielsweise auch ohne Gargutträger im Garraum 3 positioniert werden, zum Beispiel direkt auf der Gargutträgeraufnahme 23. Zur Aufnahme an dem Zubehörteil 200 ist die Befestigungseinrichtung 7 hier mit einer zweiten Koppeleinrichtung 37 ausgebildet, welche insbesondere werkzeuglos angebracht werden kann. Beispielsweise ist eine Steckverbindung und/oder Rastverbindung und/oder Schraubverbindung oder dergleichen vorgesehen. Möglich ist auch, dass die Befestigungseinrichtung 7 wenigstens teilweise fest an dem Zubehörteil 200 installiert ist.

In der Figur 7 ist das Gargerätsystem 100 mit einer Befestigungseinrichtung 7 ausgestattet, welche an einem als Gargutträger 301 ausgebildeten Zubehörteil 200 befestigt ist. Dabei ist die zweite Koppeleinrichtung 37 dazu geeignet und ausgebildet, an Gargutträgern 301 und beispielsweise an Backblechen oder Gitterrosten befestigt zu werden. Es ist möglich, dass auch spezielle Gargutträger 301 vorgesehen sind, welche für die Verbindung mit der Befestigungseinrichtung 7 vorbereitet sind. Möglich ist auch, dass die Befestigungseinrichtung 7 wenigstens teilweise an dem Gargutträger 301 fest installiert ist. Das Koppeln bzw. Entkoppeln der Befestigungseinrichtung 7 an dem Gargutträger 301 erfolgt hier werkzeuglos, beispielsweise mit einer Steckverbindung und/oder Rastverbindung und/oder Schraubverbindung. Möglich sind auch andere Verbindungsarten.

Es ist vorgesehen, dass die in den Ausgestaltungen gezeigten Messmodule 15 und Befestigungseinrichtungen 7 sowie die entsprechenden Gargeräte 1 wenigstens teilweise und insbesondere vollständig in beliebiger Weise miteinander kombinierbar sind. Beispielsweise können die gezeigten drahtlosen Messmodule 15 auch kabelgebunden sein. Ebenso können die kabelgebundenen Messmodule 15 auch drahtlos ausgestaltet sein. Die gezeigten Messmodule 15 können insbesondere mit allen hier gezeigten Befestigungseinrichtungen 7 gekoppelt werden.

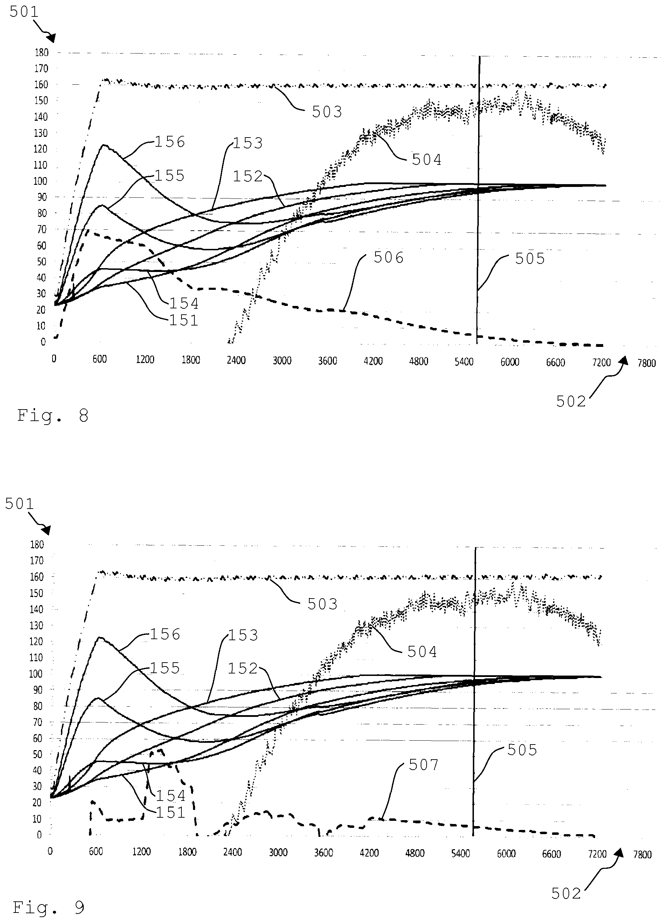

In der Figur 8 ist ein Messverlauf während eines Backvorgangs geziert. Der hier gezeigte Backvorgang entspricht beispielsweise dem Backen von 2000 g Marmorkuchen. Dazu wurde die Temperatur 501 gegen die Backzeit 502 aufgetragen. Der Verlauf der Garraumtemperatur 503 ist in einer gestrichelt/gepunkteten Linie dargestellt. Der Feuchteverlauf im Garraum ist gepunktet dargestellt. Bei diesem Backvorgang wurde der Garzustand des Garguts 300 mit einem Messmodul 15 mit 6 Messstellen 151-156 erfasst. Die an den jeweiligen Messstellen 151-156 erfasste Temperatur ist als durchgezogene Linie aufgetragen.

Der hier gezeigte Verlauf der Messtemperaturen zeigt, dass der niedrigste der 6 Temperaturwerte während des Backvorgangs in nicht vorhersehbarer Weise von einer zur anderen Messstelle springt. Einige Messstellen zeigen anfangs hohe Temperaturen, die dann später absinken und dann wieder ansteigen. Da der Teig zu Backbeginn noch nicht vollständig aufgegangen ist, liegen einige der Messstellen zu Beginn noch außerhalb des Teiges und zeigen deshalb Garraumtemperatur oder Zwischenwerte zwischen Garraum- und Teigtemperatur. Daher ergeben sich beispielsweise für die Messstellen 155 und 156 der Temperaturverläufe, welche ähnlich der Garraumtemperatur 503 sehr schnell ansteigen. Wenn der Teig beim Aufgehen über diese Messstellen 155,156 hinaus wächst, kommt es zu der hier sichtbaren charakteristischen Abkühlung. Durch den Aufgang des Teiges beim Backen wächst der Teig in der Höhe, holt einen Teil der Messstellen ein und kühlt diese auf Teigtemperatur ab. Danach steigt dort der Messwert langsam mit der Teigtemperatur wieder an.

Als Schwellenwert 505 für das Vorliegen eines fertigen Garzustands wird hier eine Minimaltemperatur von 98°C +/- 2 K angenommen. In Versuchen konnte gezeigt werden, dass die Krume einer Backware an der kühlsten Temperaturzone 303 eine Temperatur von etwa 98°C hat, wenn der Fertiggarpunkt erreicht wird. Das gilt beispielsweise für Rührteig, Hefeteig, Biskuitteig und Mürbeteig. Bei anderen Teigarten kann eine Anpassung des Schwellenwertes 505 vorgesehen sein. Das kann beispielsweise durch eine Benutzereingabe an der Bedieneinrichtung 101 erfolgen. Beispielsweise gibt der Benutzer an, welchen Typ von Teig er einsetzt oder nimmt eine manuelle Anpassung des Schwellenwertes 505 vor. Der Schwellenwert 505 ist hier als eine durchgezogene senkrechte Linie dargestellt. Der Schwellenwert 505 deckt sich zudem im Wesentlichen mit dem Maximum des Feuchteverlaufs 504, von dem bekannt ist, dass in dessen Maximum die Krume fertig gebacken ist.

Um festzustellen, ob die kühlste Temperaturzone 303 des Teiges die durch den Schwellenwert 505 festgelegte Temperatur erreicht hat, werden die Messstellen 151-156 fortlaufend und/oder in bestimmten Intervallen abgefragt. Dabei wird die niedrigste erfasste Messtemperatur registriert und als Minimaltemperatur für den Abgleich mit dem Schwellenwert 505 herangezogen. Erreicht die Minimaltemperatur den Schwellenwert 505, gilt die Krume als fertig durchgegart und das Garzeitende ist erreicht. Dann wird beispielsweise durch die Steuereinrichtung und/oder das Messsystem eine Einstellung der Gerätefunktion vorgenommen. Das kann beispielsweise das Ausschalten der Heizeinrichtung 2 und/oder ein Öffnen der Garraumtür 102 sein. Möglich ist auch, dass ein Signal an den Benutzer ausgegeben wird. Es kann auch vorgesehen sein, dass bei Erreichen des Schwellenwertes 505 ein weiterer Behandlungsschritt folgt, beispielsweise ein Bräunen oder dergleichen.

Um die Zuverlässigkeit weiter zu erhöhen, kann vorgesehen sein, dass der Schwellenwert 505 über einen bestimmten Zeitraum und/oder mit einer bestimmten Häufigkeit erreicht bzw. unterschritten werden muss, bevor das Garzeitende als erkannt gemeldet wird. Möglich ist auch, dass ein bestimmtes Muster für das Erreichen bzw. Unterschreiten des Schwellenwertes 505 vorliegen muss, bevor das Garzeitende als erkannt gemeldet wird.

Der Schwellenwert 505 ist hier in einer Speichereinrichtung des Messsystems 5 hinterlegt. Möchte der Benutzer den Teig stärker oder weniger stark durchgebacken haben, kann der Benutzer diese Wünsche beim Start des Automatikprogramms oder in den allgemeinen Einstellungen verändern. Durch solche Einstellungen wird beispielsweise der Schwellenwert 505 von 98°C nach oben oder unten verschoben.

In einer Ausgestaltung des Verfahrens wird zur Überwachung des Garzustands die Differenz zwischen der niedrigsten und der höchsten Messstellentemperatur herangezogen. Dazu werden zu einer Vielzahl von Messzeitpunkten und vorzugsweise zu fortlaufenden Messzeitpunkten Messtemperaturen an den Messstellen erfasst. Die Messtemperaturen werden miteinander verglichen und dabei die niedrigste und die höchste Messtemperatur bestimmt, die insbesondere zu einem gemeinsamen Messzeitpunkt vorlagen. Dann wird die Differenz zwischen der niedrigsten und der höchsten Messtemperatur zu einem gegebenen Messzeitpunkt ermittelt. Der Verlauf der ermittelten Differenzen 506 über die Zeit ist hier als eine gestrichelte Linie eingetragen.

Für die Berechnung der Differenz wurden hier die Temperaturwerte über 100°C bzw. über der Siedetemperatur von Wasser durch das Messsystem 5 auf 100°C gesetzt. Das verhindert, dass ein Wiederauseinanderdriften der Messstellentemperaturen zu beobachten ist, das tatsächlich durch die oberflächennahen Messstellen auftritt, wenn es zur Bräunung kommt. Dann steigen dort die Temperaturen über 100°C bis maximal zur Garraumtemperatur an, während sie im Inneren der Backware immer unter 100°C bleiben.

Typischerweise steigt die Differenz 506 nach dem Starten des Backvorgangs von null auf ein bestimmtes Maximum an. Das Maximum liegt in dem vorliegenden Beispiel bei etwa 600 Sekunden Garzeit. Das Erreichen dieses Maximums wird vorzugsweise abgewartet. Dadurch wird gewährleistet, dass der Fertiggarpunkt nicht zu früh als erkannt gemeldet wird. Nach Erreichen des Maximums fällt die Differenz 506 wieder ab.

Zur Erkennung des Fertiggarpunkts wird abgewartet, bis die Differenz einen Schwellenwert 505 unterschreitet. Beispielsweise wird ein fertiger Garzustand, bei dem die Krume durchgebacken ist, hier bei einem Wert der der Differenz bzw. bei einem Betrag der Differenz von 5 K angenommen. Möglich ist auch die Vorgabe einer höheren und/oder niedrigeren Differenz. Zur Verifizierung können Bestätigungsmessungen abgewartet und/oder das Vorliegen bestimmter Muster gefordert werden. Auch für den Schwellenwert 505 für die Differenz ist eine Anpassung durch den Benutzer möglich und vorgesehen.

In der Figur 9 ist eine erfindungsgemäße Weiterbildung des Verfahrens gezeigt, bei welcher ein zeitlicher Gradient berücksichtigt wird. Beispielsweise kann dazu ein Gradient der niedrigsten Messtemperatur oder der Gradient der Differenz zwischen niedrigster und höchster Messtemperatur herangezogen werden. Zudem kann auch vorgesehen sein, dass ein zeitlicher Verlauf des zeitlichen Gradienten herangezogen wird. Dabei wird der fertige Garzustand dadurch definiert, dass der zeitliche Gradient einen Schwellenwert 505 unterschreitet. In dem hier gezeigten beispielhaften Backverlauf, welcher im Wesentlichen dem Backverlauf der Figur 8 entspricht, wurde der zeitliche Gradient der Differenz zwischen niedrigster und höchster Messtemperatur gestrichelt eingetragen. Zur besseren Übersichtlichkeit wurde der berechnete zeitliche Gradient mit umgekehrtem Vorzeichen und mit Faktor 1000 multipliziert.

Die Betrachtung eines zeitlichen Gradienten zur Überwachung des Garzustands bietet viele Vorteile. Einen besonderen Vorteil bietet das Heranziehen des zeitlichen Gradienten gegenüber Schwellenwertkonzepten. Bei einer Erkennung des Garzustands durch Erreichen eines Schwellenwertes kann es bei der Verwendung von nicht korrekt kalibrierten Temperatursensoren zu einer zu frühen oder zu späten oder auch zu gar keiner Erkennung des Fertiggarpunkts kommen. Ebenso kann es zu Fehlerkennungen kommen, wenn Wärmeleitung über das Spießrohr den Wert der kühlsten Temperaturzone 303 verfälscht. Bei Schwellenwertkonzepten kann es auch zu Problemen kommen, wenn der als Schwelle hinterlegte Wert für die Differenz nicht erreicht wird, weil zum Beispiel eine Messstelle statt 100°C nur 94°C anzeigt. Das kann beispielsweise aufgrund von Kalibrierabweichungen der Fall sein. In einem solchen Fall kann eine geforderte Schwelle für die Differenz von z. B. kleiner oder gleich 5K nicht erreicht werden. Würde nur diese Schwelle herangezogen, würde der Fertiggarpunkt nicht erkannt.

Daher ist es sinnvoll, allein oder ergänzend den zeitlichen Gradienten bzw. den zeitlichen Verlauf des zeitlichen Gradienten zu betrachten. Zeigen beispielsweise 3 Messstellen bei 100°C jeweils 100°C, 98°C und 94°C, so ist die Differenz bei 100°C in Beharrung bei 6 K. Wenn die tatsächliche Temperatur nicht über 100°C steigen kann, ändert sich daran auch nichts mehr, die Differenz bleibt 6 K. Der zeitliche Gradient der Differenz beträgt jedoch 0 K/min. Somit würde es trotz der Differenz oberhalb des geforderten Schwellenwertes bei einer Berücksichtigung des zeitlichen Gradienten zu einer erfolgreichen und zuverlässigen Abschaltung am Fertigzeitpunkt kommen. Mit dem Gradienten wird also beobachtet, ob sich an dem Temperaturanstieg bzw. an dem Zusammenwachsen der Temperaturen an allen Messstellen noch etwas ändert oder nicht mehr.

Es kann daher vorgesehen sein, dass auch dann der fertige Garzustand anhand des zeitlichen Gradienten erkannt wird, wenn die niedrigste Temperatur noch nicht ihren Schwellenwert erreicht hat oder wenn die Differenz noch nicht auf das erforderliche Maß zusammengeschrumpft ist. Die Betrachtung des zeitlichen Gradienten überstimmt insofern die Schwellenwertauswertung der Minimaltemperatur bzw. der Differenz der Minimal- und Maximaltemperatur. Der zeitliche Gradient kann somit zur Absicherung dienen, damit immer ein sicherer Abschaltpunkt gefunden werden kann, auch bei schlecht oder nicht kalibrierten Messstellen. Somit kann das Backzeitende immer dann angenommen werden, wenn sich in den Temperaturverläufen nichts Wesentliches mehr bewegt bzw. ändert. Es kann aber auch vorgesehen sein, dass der zeitliche Gradient nicht mehr herangezogen wird, beispielsweise wenn die Minimaltemperatur und/oder die Differenz den geforderten Schwellenwert erreicht bzw. unterschritten haben und somit ein fertiger Garzustand definiert werden konnte.

Zudem können auch weitere Argumente aus einer mathematischen Kurvendiskussion herangezogen werden, wie zum Beispiel extreme Werte und/oder eine Steigungsbetrachtung. Diese Argumente können einzeln oder in Verbindung miteinander zu Kriterien verbunden werden, die letztlich den gesicherten Fertigzeitpunkt beim Backen aus den gewonnenen Temperaturverläufen bestimmen.

**Bezugszeichenliste**

| | | | |
|---|---|---|---|
| 1 | Gargerät | 151 | Messstelle |
| 2 | Heizeinrichtung | 152 | Messstelle |
| 3 | Garraum | 153 | Messstelle |
| 4 | Sensoreinrichtung | 154 | Messstelle |
| 5 | Messsystem | 155 | Messstelle |
| 6 | Steuereinrichtung | 156 | Messstelle |
| 7 | Befestigungseinrichtung | 157 | Messstelle |
| 13 | Garraumwand | 200 | Zubehörteil |
| 14 | Sensoreinheit | 300 | Gargut |
| 15 | Messmodul | 301 | Gargutträger |
| 23 | Gargutträgeraufnahme | 302 | Backform |
| 25 | Zubehörmodul | 303 | Temperaturzone |
| 27 | Koppeleinrichtung | 350 | Spieß |
| 35 | Einstichabschnitt | 450 | Griffeinrichtung |
| 37 | Koppeleinrichtung | 501 | Temperatur |
| 45 | Schaftabschnitt | 502 | Zeit |
| 47 | Abstandshalter | 503 | Garraumtemperatur |
| 95 | Auswertemodul | 504 | Feuchte |
| 101 | Bedieneinrichtung | 505 | Schwelle |
| 102 | Tür | 506 | Differenz |
| 103 | Griff | 507 | Gradient |

## Patentansprüche

1. Verfahren zum Backen von Gargut (300) mit wenigstens einem Gargerät (1), wobei mit wenigstens einer Heizeinrichtung (2) wenigstens ein Garraum (3) beheizt wird und mit wenigstens einer Steuereinrichtung (6) wenigstens eine Gerätefunktion eingestellt wird, wobei mit wenigstens einem Messsystems (5) an wenigstens zwei beabstandeten Messstellen (151-156) jeweils wenigstens eine charakteristische Größe für eine Temperatur und insbesondere für eine Krumentemperatur des Gargutes (300) erfasst und als eine Messtemperatur registriert wird und wobei aus den registrierten Messtemperaturen, welche zu wenigstens einem definierten Messzeitpunkt an den verschiedenen Messstellen (151-156) erfasst werden, die niedrigste und die höchste Messtemperatur bestimmt werden, wobei die niedrigste Messtemperatur als eine Minimaltemperatur und die höchste Messtemperatur als eine Maximaltemperatur zur Ermittlung eines Garzustand des Garguts (300) herangezogen werden und wobei in Abhängigkeit des ermittelten Garzustands wenigstens eine Gerätefunktion durch die Steuereinrichtung (6) eingestellt wird,
**dadurch gekennzeichnet,**
**dass** wenigstens ein zeitlicher Gradient der Minimaltemperatur und/oder wenigstens ein zeitlicher Gradient des Betrages der Differenz von Minimaltemperatur und Maximaltemperatur ermittelt wird, mit wenigstens einem Schwellenwert verglichen wird und dass ein zeitlicher Gradient unterhalb des Schwellenwertes wenigstens eine Voraussetzung für die Annahme eines fertigen Garzustands ist.

2. Verfahren nach dem vorhergehenden Anspruch 1, **dadurch gekennzeichnet, dass** der zeitliche Gradient als Funktion der Zeit berechnet und herangezogen wird.

3. Verfahren nach Anspruch 3, **dadurch gekennzeichnet, dass** wenigstens eine Benutzereingabe zur wenigstens teilweisen Anpassung des Schwellenwertes erfolgt und dass der angepasste Schwellenwert für die Ermittlung des Garzustands wenigstens teilweise berücksichtigt wird.

4. Verfahren nach einem der vorhergehenden Ansprüche, **dadurch gekennzeichnet, dass** die Messstellen (151-156) an wenigstens einem Messmodul (15) angeordnet sind und dass das Messmodul (15) mittels wenigstens einer Befestigungseinrichtung (7) außerhalb vom Gargut (300) im Garraum (3) befestigt wird und dabei wenigstens eine der Messstellen (151-156) im Gargut (300) liegt.

5. Gargerät (1) mit wenigstens einem mittels wenigstens einer Heizeinrichtung (2) beheizbaren Garraum (3) und mit wenigstens einer Steuereinrichtung (6) zur Einstellung von Gerätefunktionen, eingerichtet und geeignet zur Durchführung eines Verfahrens nach einem der vorhergehenden Ansprüche.

## Claims

1. Method for baking food (300) by means of at least one cooking appliance (1), at least one cooking chamber (3) being heated by means of at least one heating device (2) and at least one appliance function being set by means of at least one control device (6), in each case at least one characteristic variable for a temperature and in particular for a crumb temperature of the food (300) being detected at at least two spaced-apart measuring points (151-156) by means of at least one measuring system (5) and being registered as a measured temperature, and the lowest and the highest measured temperature being identified from the registered measured temperatures which are detected at the different measuring points (151-156) at at least one defined measuring time, the lowest measured temperature being used as a minimum temperature and the highest measured temperature being used as a maximum temperature in order to determine a cooking state of the food (300) and at least one device function being set by the control device (6) depending on the determined cooking state, **characterised in that** at least one temporal gradient of the minimum temperature and/or at least one temporal gradient of the amount of the difference between the minimum temperature and the maximum temperature is determined and compared with at least one threshold value, and **in that** a temporal gradient below the threshold value is at least one prerequisite for assuming a finished cooking state.

2. Method according to the preceding claim 1, **characterised in that** the temporal gradient is calculated and used as a function of time.

3. Method according to claim 3, **characterised in that** at least one user input takes place for at least partially adjusting the threshold value and **in that** the adjusted threshold value is at least partially taken into account for determining the cooking state.

4. Method according to any of the preceding claims, **characterised in that** the measuring points (151-156) are arranged on at least one measuring module (15) and **in that** the measuring module (15) is fastened outside of the food (300) in the cooking chamber (3) by means of at least one fastening device (7) and at least one of the measuring points (151-156) is in the food (300).

5. Cooking appliance (1) comprising at least one cooking chamber (3) which can be heated by means of at least one heating device (2), and comprising at least one control device (6) for setting device functions, which cooking appliance is designed and suitable for carrying out a method according to any of the preceding claims.

## Revendications

1. Procédé de cuisson d'aliments à cuire (300) avec au moins un appareil de cuisson (1), dans lequel au moins une chambre de cuisson (3) est chauffée avec au moins un dispositif de chauffage (2) et au moins une fonction de l'appareil est réglée avec au moins un dispositif de commande (6), dans lequel au moins une grandeur caractéristique d'une température, notamment d'une température de la mie de l'aliment à cuire (300), est détectée avec au moins un système de mesure (5) à au moins deux points de mesure (151-156) espacés l'un de l'autre et est enregistrée comme température de mesure, et dans lequel la température de mesure la plus basse et la plus élevée sont déterminées à partir des températures de mesure enregistrées, lesquelles sont détectées à au moins un instant de mesure défini au niveau des différents points de mesure (151-156), dans lequel la température de mesure la plus basse est utilisée comme température minimale et la température de mesure la plus élevée comme température maximale pour déterminer un état de cuisson de l'aliment à cuire (300) et au moins une fonction de l'appareil est réglée par le dispositif de commande (6) en fonction de l'état de cuisson déterminé, **caractérisé en ce qu'**au moins un gradient temporel de la température minimale et/ou au moins un gradient temporel de la valeur de la différence entre la température minimale et la température maximale est déterminé, puis comparé à au moins une valeur seuil et **en ce qu'**un gradient temporel inférieur à la valeur seuil est au moins une condition préalable pour supposer un état de cuisson terminé.

2. Procédé selon la revendication 1 précédente, **caractérisé en ce que** le gradient temporel est calculé et utilisé en fonction du temps.

3. Procédé selon la revendication 3, **caractérisé en ce qu'**au moins une entrée d'utilisateur est effectuée pour ajuster au moins partiellement la valeur seuil et **en ce que** la valeur seuil ajustée est au moins partiellement prise en compte pour déterminer l'état de cuisson.

4. Procédé selon l'une des revendications précédentes, **caractérisé en ce que** les points de mesure (151-156) sont disposés sur au moins un module de mesure (15) et **en ce que** le module de mesure (15) est fixé au moyen d'au moins un dispositif de fixation (7) à l'extérieur de l'aliment à cuire (300) dans la chambre de cuisson (3) et au moins un des points de mesure (151-156) se trouve ainsi dans l'aliment à cuire (300).

5. Appareil de cuisson (1) avec au moins une chambre de cuisson (3) pouvant être chauffée au moyen d'au moins un dispositif de chauffage (2) et avec au moins un dispositif de commande (6) permettant de régler les fonctions de l'appareil, ledit appareil de cuisson étant conçu et adapté pour mettre en œuvre un procédé selon l'une des revendications précédentes.
